# EUROPÄISCHE PATENTANMELDUNG

(11) **EP 3 323 558 A1**
(43) Veröffentlichungstag der Anmeldung: **23.05.2018**
(21) Anmeldenummer: 16199454.6
(22) Anmeldetag: 18.11.2016
(51) Int. Cl.: B25C 1/06

(54) **SCHWUNGRADANGETRIEBENES SETZGERÄT UND VERFAHREN ZUM BETREIBEN EINES DERARTIGEN SETZGERÄTS**

(71) Anmelder: HILTI Aktiengesellschaft, 9494 Schaan (LI)
(72) Erfinder: Schmidt, Dominik, 9470 Buchs (CH); Dittrich, Tilo, 6800 Feldkirch (AT); Thon, Raphael, 6800 Feldkirch (AT)
(74) Vertreter: Hilti Aktiengesellschaft Corporate Intellectual Property

(57) **Zusammenfassung**

Die Erfindung betrifft ein schwungradangetriebenes Setzgerät (50) zum Eintreiben von Befestigungselementen (40) in einen Untergrund, mit einem in einer Setzrichtung (14) durch ein Schwungrad (3) antreibbaren Eintreibelement (10), das zwischen dem um eine Schwungraddrehachse (5) drehbaren Schwungrad (3) und einer um eine Gegenrollendrehachse (8) drehbaren Gegenrolle (7) geführt ist.

Um ein schwungradangetriebenes Setzgerät zu schaffen, das einfach aufgebaut und kostengünstig herstellbar ist, ist die Schwungraddrehachse (5) in einem Winkel Alpha (α) ungleich Null zu der Gegenrollendrehachse (8) angeordnet.

## Beschreibung

### Technisches Gebiet

Die Erfindung betrifft ein schwungradangetriebenes Setzgerät zum Eintreiben von Befestigungselementen in einen Untergrund, mit einem in einer Setzrichtung durch ein Schwungrad antreibbaren Eintreibelement, das zwischen dem um eine Schwungraddrehachse drehbaren Schwungrad und einer um eine Gegenrollendrehachse drehbaren Gegenrolle geführt ist. Die Erfindung betrifft des Weiteren ein Verfahren zum Betreiben eines derartigen Setzgeräts.

### Stand der Technik

Aus der deutschen Offenlegungsschrift DE 10 2009 028 438 A1, der europäischen Offenlegungsschrift EP 2 711 135 A2 und der amerikanischen Offenlegungsschrift US 2011/0259937 A1 sind Setzgeräte bekannt, bei denen während eines Setzvorgangs eine reibschlüssige Verbindung zwischen dem Eintreibelement und dem Schwungrad hergestellt wird, um Rotationsenergie des Schwungrads auf das Eintreibelement zu übertragen.

### Darstellung der Erfindung

Aufgabe der Erfindung ist es, ein schwungradangetriebenes Setzgerät zum Eintreiben von Befestigungselementen in einen Untergrund, mit einem in einer Setzrichtung durch ein Schwungrad antreibbaren Eintreibelement, das zwischen dem um eine Schwungraddrehachse drehbaren Schwungrad und einer um eine Gegenrollendrehachse drehbaren Gegenrolle geführt ist, zu schaffen, das einfach aufgebaut und kostengünstig herstellbar ist.

Die Aufgabe ist bei einem schwungradangetriebenen Setzgerät zum Eintreiben von Befestigungselementen in einen Untergrund, mit einem in einer Setzrichtung durch ein Schwungrad antreibbaren Eintreibelement, das zwischen dem um eine Schwungraddrehachse drehbaren Schwungrad und einer um eine Gegenrollendrehachse drehbaren Gegenrolle geführt ist, dadurch gelöst, dass eine Flächennormale der vorzugsweise ebenen Schwungradkupplungsfläche in einem Winkel Alpha ungleich Null zu einer Flächennormalen der vorzugsweise ebenen Gegenrollenkupplungsfläche angeordnet ist.

Bei dem schwungradangetriebenen Setzgerät handelt es sich vorzugsweise um ein handgeführtes Setzgerät, das auch als Setzwerkzeug bezeichnet wird. Bei dem Eintreibelement handelt es sich zum Beispiel um einen Setzkolben, der in dem Setzgerät translatorisch hin und her bewegbar ist, um Befestigungselemente in einen Untergrund einzutreiben. Die zur Bewegung des Eintreibelements benötigte Energie wird vorteilhaft von dem sich um die Schwungraddrehachse drehbaren Schwungrad auf das Eintreibelement übertragen. Eine Rückführung des Eintreibelements nach einem erfolgten Setzvorgang erfolgt zum Beispiel in einer an sich bekannten Art und Weise mit Hilfe von Federn und/oder Gummipuffern. Der Winkel Alpha zwischen der Schwungradkupplungsfläche und der Gegenrollenkupplungsfläche dient zur Darstellung einer Schrägradkupplung, vorzugsweise mit Selbstverstärkung oder Reibkraftverstärkung. Durch die Selbstverstärkung oder Reibkraftverstärkung kann eine Anpresskraft, die das Eintreibelement mit dem Schwungrad in Eingriff bringt, vorteilhaft reduziert werden. Durch die reduzierte Anpresskraft kann eine Akkuleistung des Setzgeräts verbessert werden. Durch das Schrägstellen der Schwungradkupplungsfläche und der Gegenrollenkupplungsfläche kann der Kontaktbereich zwischen Schwungrad/Gegenrolle und dem Eintreibelement wirksam vergrößert werden.

Ein bevorzugtes Ausführungsbeispiel des schwungradangetriebenen Setzgeräts ist dadurch gekennzeichnet, dass die Schwungraddrehachse (5) parallel zu der Gegenrollendrehachse (8) angeordnet ist. Ein alternatives Ausführungsbeispiel des schwungradangetriebenen Setzgeräts ist dadurch gekennzeichnet, dass die Schwungraddrehachse ebenfalls in einem Winkel Alpha ungleich Null, bevorzugt in dem gleichen Winkel wie zwischen der Schwungradkupplungsfläche und der Gegenrollenkupplungsfläche, zu der Gegenrollendrehachse angeordnet ist.

Ein bevorzugtes Ausführungsbeispiel des schwungradangetriebenen Setzgeräts ist dadurch gekennzeichnet, dass das Eintreibelement eine dem Schwungrad zugewandte Schwungradkupplungsfläche aufweist, die parallel zur Schwungraddrehachse angeordnet ist. Die schräggestellte Schwungradkupplungsfläche stellt vorteilhaft eine Keilfläche der Schrägradkupplung dar.

Ein weiteres bevorzugtes Ausführungsbeispiel des schwungradangetriebenen Setzgeräts ist dadurch gekennzeichnet, dass das Eintreibelement eine der Gegenrolle zugewandte Gegenrollenkupplungsfläche aufweist, die parallel zur Gegenrollendrehachse angeordnet ist. Die schräggestellte Gegenrollenkupplungsfläche stellt vorteilhaft eine weitere Keilfläche der Schrägradkupplung dar. Die beiden Kupplungsflächen oder Keilflächen sind, bezogen auf eine Mittelachse des Eintreibelements, vorzugsweise symmetrisch angeordnet.

Ein weiteres bevorzugtes Ausführungsbeispiel des schwungradangetriebenen Setzgeräts ist dadurch gekennzeichnet, dass das Eintreibelement mit der Schwungradkupplungsfläche und der Gegenrollenkupplungsfläche einen keilförmigen Querschnitt aufweist. Der keilförmige Querschnitt des Eintreibelements dient vorteilhaft zur Verstärkung einer Kupplungsnormalkraft der Schrägradkupplung. Der Keileffekt ermöglicht eine hohe Normalkraft und damit hohe Reibungskräfte bei einer verhältnismäßig geringen Kupplungskraft zum Schließen der Schrägradkupplung.

Ein weiteres bevorzugtes Ausführungsbeispiel des schwungradangetriebenen Setzgeräts ist dadurch gekennzeichnet, dass die Schwungradkupplungsfläche und die Gegenrollenkupplungsfläche als ebene Flächen ausgeführt sind, die zum Antreiben des Eintreibelements mit Mantelflächen des Schwungrads beziehungsweise der Gegenrolle reibschlüssig verbunden werden. Durch die schräggestellten Kupplungsflächen kann in Kombination mit dem Schwungrad und der Gegenrolle bei geschlossener Schrägradkupplung eine Abrollbewegung mit einem geringen Gleitanteil dargestellt werden. Dadurch können der Verschleiß im Betrieb des Setzgeräts verringert und dessen Lebensdauer erhöht werden. Die keilförmige Anordnung der Kupplungsflächen ermöglicht eine nahezu beliebige Vergrößerung der Reibkontaktflächen zwischen Schwungrad/Gegenrolle und Eintreibelement. Dadurch kann besonders vorteilhaft auf das Vorsehen von im Wesentlichen V-förmigen Nuten an Eintreibelement und Schwungrad/Gegenrolle verzichtet werden. Ein Schwungrad ohne Nuten hat bei gleicher Masse eine höhere Massenträgheit als ein Schwungrad mit Nuten. Durch das Weglassen der Nuten kann bei gleicher Drehzahl vorteilhaft mehr Energie in dem Schwungrad zwischengespeichert und abgerufen werden. Dadurch können vorteilhaft Setzgeräte mit einer gesteigerten Setzenergie geschaffen werden.

Ein weiteres bevorzugtes Ausführungsbeispiel des schwungradangetriebenen Setzgeräts ist dadurch gekennzeichnet, dass der Winkel Alpha ein spitzer Winkel ist. Der Winkel Alpha ist vorteilhaft kleiner als sechzig Grad. Bei im Rahmen der Erfindung durchgeführten Untersuchungen und Versuchen hat sich herausgestellt, dass ein Winkel Alpha zwischen dreißig und vierzig Grad in dem schwungradangetriebenen Setzgerät die besten Resultate liefert.

Ein weiteres bevorzugtes Ausführungsbeispiel des schwungradangetriebenen Setzgeräts ist dadurch gekennzeichnet, dass zwischen einer Senkrechten zu einer Bewegungsachse des Eintreibelements und der Schwungraddrehachse/Gegenrollendrehachse ein Winkel Beta ungleich Null vorgesehen ist. Das Eintreibelement wird beim Eintreiben eines Befestigungselements entlang seiner Bewegungsachse translatorisch bewegt. Die Senkrechte zu der Bewegungsachse stellt gleichzeitig eine Winkelhalbierende zu dem Winkel Alpha dar. Sowohl die Schwungraddrehachse als auch die Gegenrollendrehachse sind in einem Winkel Beta ungleich Null zu der Senkrechten angeordnet. Der Winkel Beta ist vorteilhaft deutlich kleiner als der Winkel Alpha. Der Winkel Beta ist vorteilhaft kleiner als zehn Grad. Mit dem Winkel Beta wird besonders vorteilhaft eine Selbstverstärkung oder Reibkraftverstärkung der geschlossenen Schrägradkupplung erreicht. Der Winkel Beta ist hauptsächlich dafür verantwortlich, dass die Schrägradkupplung mit dem Eintreibelement, dem Schwungrad und der Gegenrolle selbstverstärkend wirkt, sobald das Eintreibelement mit dem Schwungrad und der Gegenrolle in Kontakt oder Eingriff kommt. Das Eintreibelement wird während eines Setzvorgangs sozusagen selbständig in das Kupplungssystem hineingezogen, da eine Förderwirkung des Antriebssystems das Eintreibelement in den sich keilförmig verjüngenden Bereich zwischen dem Schwungrad und der Gegenrolle hineindrückt. Dabei verkeilt sich das Kupplungssystem mit dem Eintreibelement zwischen dem Schwungrad und der Gegenrolle selbst.

Ein weiteres bevorzugtes Ausführungsbeispiel des schwungradangetriebenen Setzgeräts ist dadurch gekennzeichnet, dass die Wirkungslinie einer Anpresskraft, die zum Erzeugen einer Kupplungsnormalkraft auf das Eintreibelement aufgebracht wird, senkrecht zu einer beziehungsweise der Bewegungsachse des Eintreibelements verläuft. Wenn die Anpresskraft auf das Eintreibelement aufgebracht wird, wird das Eintreibelement mit seinen Kupplungsflächen an das Schwungrad und die Gegenrolle gepresst. Dabei wird Rotationsenergie des Schwungrads reibschlüssig auf das Eintreibelement übertragen. Die Anpresskraft wird zum Beispiel über eine Linearführung auf das Eintreibelement aufgebracht. Das Aufbringen der Anpresskraft kann in an sich bekannter Art und Weise mit Hilfe einer Andruckrolle, eines Keils und eines Stößels erfolgen, der zum Beispiel durch einen Elektromagneten betätigt wird.

Ein weiteres bevorzugtes Ausführungsbeispiel des schwungradangetriebenen Setzgeräts ist dadurch gekennzeichnet, dass das Eintreibelement zwischen zwei Linearführungen geführt ist. Das Eintreibelement hat zur Darstellung seiner Keilform zum Beispiel im Querschnitt die Gestalt eines gleichschenkligen Trapezes mit zwei parallelen Grundseiten, die durch zwei Schenkel miteinander verbunden sind. Die Schenkel des trapezförmigen Querschnitts des Eintreibelements dienen zur Darstellung der Kupplungsflächen. Die beiden Linearführungen sind vorzugsweise an den Grundseiten des Trapezes des keilförmigen Querschnitts des Eintreibelements angeordnet. Durch die beiden Linearführungen wird das Eintreibelement translatorisch hin und her bewegbar geführt.

Bei einem Verfahren zum Betreiben eines vorab beschriebenen Setzgeräts ist die oben angegebene Aufgabe alternativ oder zusätzlich dadurch gelöst, dass das Eintreibelement beim Schließen einer mit dem Schwungrad und der Gegenrolle dargestellten Schrägradkupplung selbstverstärkend angetrieben wird. Das Eintreibelement mit den Kupplungsflächen ist geometrisch relativ einfach und daher kostengünstig herstellbar. Gleiches gilt für das Schwungrad und die Gegenrolle.

Die Erfindung betrifft gegebenenfalls auch ein Eintreibelement, ein Schwungrad und/oder eine Gegenrolle für ein vorab beschriebenes Setzgerät. Die genannten Teile sind separat handelbar.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine vereinfachte, perspektivische Darstellung eines Schwungradantriebs eines Setzgeräts zum Eintreiben von Befestigungselementen in einen Untergrund;
Figur 2 eine Rückansicht des Schwungradantriebs aus Figur 1;
Figur 3 eine Seitenansicht des Schwungradantriebs aus Figur 1;
Figur 4 eine Draufsicht des Schwungradantriebs aus Figur 1;
Figur 5 eine perspektivische Darstellung eines ähnlichen Schwungradantriebs wie in Figur 1 mit Linearführungen für ein Eintreibelement;
Figur 6 eine Rückansicht des Schwungradantriebs aus Figur 5;
Figur 7 eine Seitenansicht des Schwungradantriebs aus Figur 5;
Figur 8 eine Draufsicht des Schwungradantriebs aus Figur 5;
Figur 9 eine vereinfachte Darstellung eines Setzgeräts mit einem Schwungradantrieb, wie er in den Figuren 5 bis 8 dargestellt ist, und
Figur 10 eine Rückansicht eines Schwungradantriebs in einer weiteren Ausführungsform.

### Ausführungsbeispiele

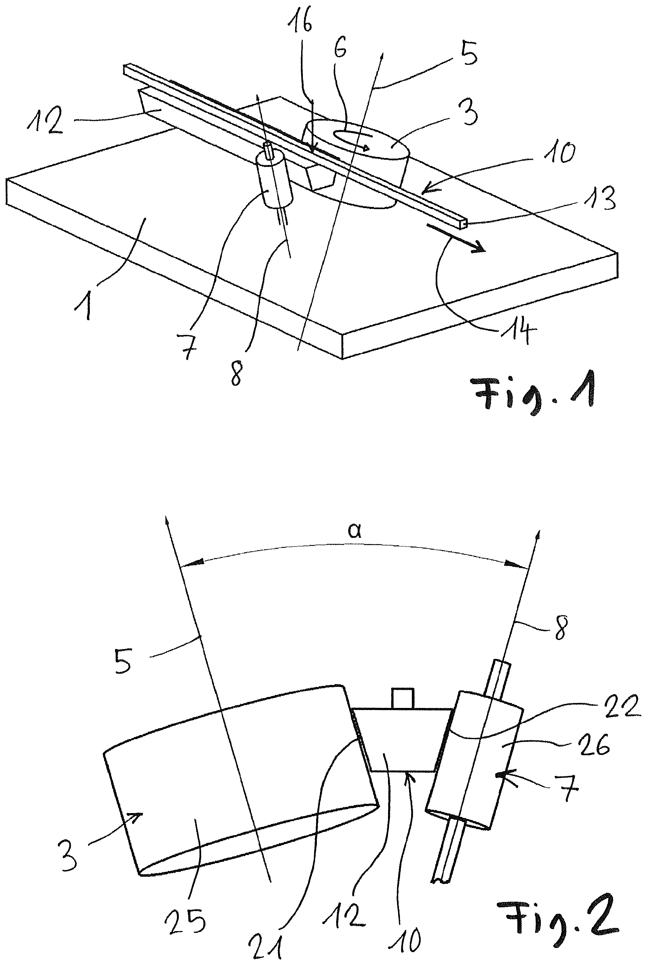

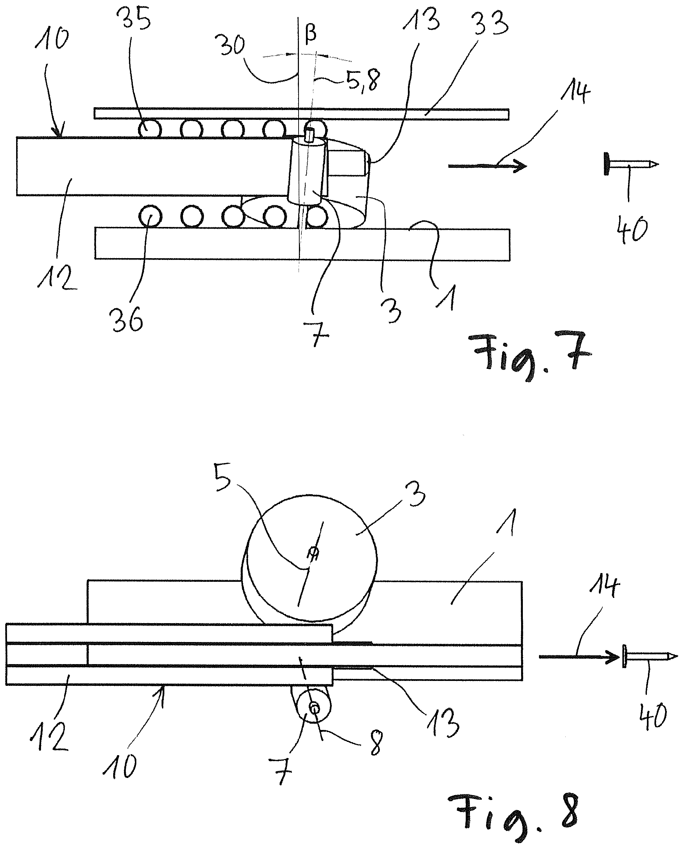

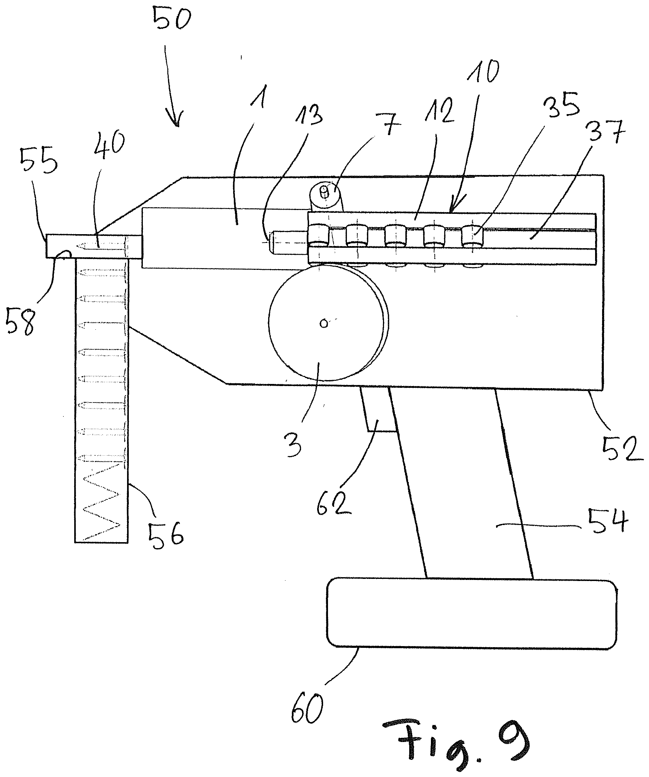

In den Figuren 1 bis 8 sowie 10 sind drei ähnliche Ausführungsbeispiele eines Schwungradantriebs für ein Setzgerät oder Setzwerkzeug, wie es Figur 9 dargestellt ist, in verschiedenen Ansichten dargestellt. Zur Bezeichnung gleicher oder ähnlicher Teile werden der Einfachheit halber die gleichen Bezugszeichen verwendet.

In Figur 1 ist mit Hilfe einer im Wesentlichen quaderförmigen Platte eine gehäusefeste Bezugsfläche 1 dargestellt. Ein Schwungrad 3 ist um eine Schwungraddrehachse 5 relativ zu der gehäusefesten Bezugsfläche 1 drehbar, wie durch einen Pfeil 6 angedeutet ist. Eine Gegenrolle 7 ist um eine Gegenrollendrehachse 8 ebenfalls zu der gehäusefesten Bezugsfläche 1 drehbar.

Zwischen dem Schwungrad 3 und der Gegenrolle 7 ist ein Eintreibelement 10 angeordnet. Das Eintreibelement 10 ist als Setzkolben 12 mit einer Kolbenspitze 13 ausgeführt und zwischen dem Schwungrad 3 und der Gegenrolle 7 translatorisch in Richtung eines Pfeils 14 bewegbar. Der Pfeil 14 veranschaulicht eine Setzrichtung eines mit dem Schwungradantrieb ausgestatteten Setzgeräts.

Das Schwungrad 3, die Gegenrolle 7, das Eintreibelement 10 stellen eine Schrägradkupplung dar. Wenn eine durch einen Pfeil 16 angedeutete Anpresskraft in Figur 1 von oben auf das Eintreibelement 10 aufgebracht wird, wird das Eintreibelement 10 beziehungsweise der Setzkolben 12 mit seinen Flanken an das Schwungrad 3 und die Gegenrolle 7 gepresst. Die durch den Pfeil 6 angedeutete Rotationsenergie des Schwungrads 3 wird dann reibschlüssig auf das Eintreibelement 10 übertragen. Dadurch wird das Eintreibelement 10 translatorisch in der Setzrichtung 14 beschleunigt, so dass ein Setzvorgang ausgeführt werden kann.

In Figur 2 ist die Schrägradkupplungsanordnung mit dem Eintreibelement 10, dem Schwungrad 3 und der Gegenrolle 7 in einer rückseitigen Ansicht dargestellt. In der Rückansicht sieht man, dass das Eintreibelement 10 beziehungsweise der Setzkolben 12 im Querschnitt die Gestalt eines Trapezes mit zwei parallelen Grundseiten aufweist, die durch zwei Schenkel miteinander verbunden sind.

Der in Figur 2 linke Schenkel des keilförmigen oder trapezförmigen Querschnitts des Eintreibelements 10 stellt eine Schwungradkupplungsfläche 21 dar. Der in Figur 2 rechte Trapezschenkel stellt eine Gegenrollenkupplungsfläche 22 dar. Die Schwungradkupplungsfläche 21 ist reibschlüssig mit einer Mantelfläche 25 des Schwungrads 3 verbindbar. Analog ist die Gegenrollenkupplungsfläche 22 mit einer Mantelfläche 26 der Gegenrolle 7 reibschlüssig verbindbar.

In Figur 2 sieht man, dass die Schwungraddrehachse 5 in einem Winkel α zu der Gegenrollendrehachse 8 angeordnet ist. Die Schwungradkupplungsfläche 21 ist parallel zu der Schwungraddrehachse 5 angeordnet, wodurch das Schwungrad 3 eine Kreiszylinderform aufweist. Die Gegenrollendrehachse 8 ist parallel zu der Gegenrollenkupplungsfläche 22 angeordnet, so dass auch die Gegenrolle 7 eine Kreiszylinderform aufweist.

Daraus ergibt sich, dass die beiden Kupplungsflächen 21, 22 ebenfalls den Winkel α einschließen. Der Winkel α zwischen der Schwungraddrehachse 5 und der Gegenrollendrehachse 8 wird vorteilhaft für eine Reibkraftverstärkung genutzt. Bei einem Setzvorgang bewegt sich das Eintreibelement 10 beziehungsweise der Setzkolben 12 in Figur 2 in die Zeichenebene hinein.

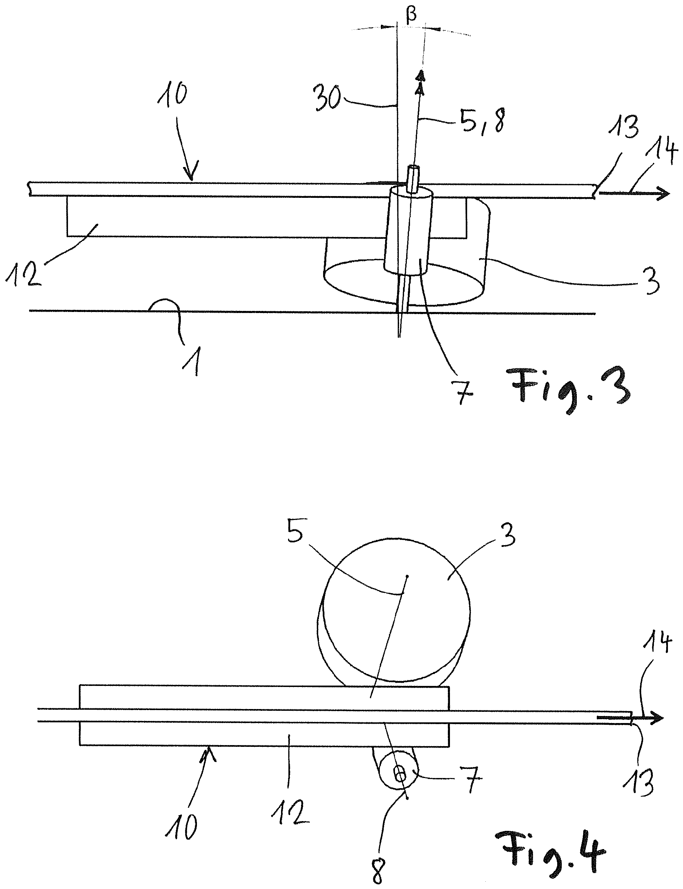

In Figur 3 ist durch eine Linie 30 eine Senkrechte zu einer Bewegungsachse des Eintreibelements 10 angedeutet. Die Bewegungsachse entspricht der Setzrichtung 14 in Figur 1. Durch einen Pfeil mit zwei Spitzen ist angedeutet, dass sowohl die Schwungraddrehachse 5 als auch die Gegenrollendrehachse 8 in einem Winkel β zu der Senkrechten 30 angeordnet sind.

Der Winkel β beschreibt den Winkel zwischen der Senkrechten 30 zur Kolbenachse des Setzkolbens 12 und der Drehachse 5 beziehungsweise 8 des Schwungrads 3 beziehungsweise der Gegenrolle 7. In Analogie zum Schwungrad 3 kann die Gegenrolle 7 auch als Gegenrad bezeichnet werden.

Der Winkel β ist dafür verantwortlich, dass die Schrägradkupplung selbstverstärkend wirkt, sobald das Eintreibelement 10 beziehungsweise der Setzkolben 12 mit dem Schwungrad 3 und der Gegenrolle 7 in Eingriff kommt. Der Setzkolben 12 beziehungsweise das Eintreibelement 10 wird während eines Setzvorgangs sozusagen selbständig in das System hineingezogen, da die Förderwirkung des Antriebsystems den Setzkolben 12 beziehungsweise das Eintreibelement 10 in Figur 3 nach unten drückt.

In Figur 4 ist das Schwungradantriebssystem aus Figur 1 in der Draufsicht dargestellt. In der Draufsicht sieht man, dass die beiden Drehachsen 5, 8 durch die Winkel α und β sozusagen zweifach schräggestellt sind.

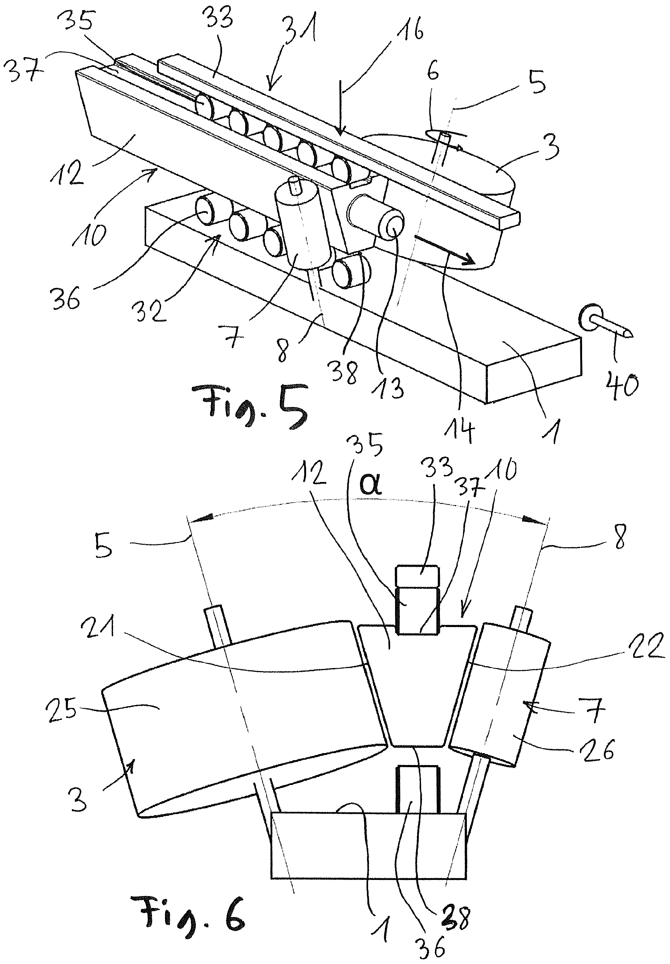

Die Figuren 5 bis 8 zeigen ein ähnliches Schwungradantriebssystem wir in den Figuren 1 bis 4. In den Figuren 5 bis 8 sind zusätzlich zwei Linearführungen 31, 32 für das Eintreibelement 10 vorgesehen. Die Linearführung 31 umfasst eine Führungsschiene 33 und eine Führungsbahn 37 an dem Eintreibelement 10. Zur Darstellung einer reibungsarmen Führung sind Rollen 35 zwischen der Führungsschiene 33 und der Führungsbahn 37 angeordnet.

Die Linearführung 32 umfasst Rollen 36, die zwischen der gehäusefesten Bezugsfläche 1 und einer Führungsbahn 38 an dem Eintreibelement 10 angeordnet sind.

In Figur 6 ist ein Führungsspiel zwischen den Rollen 36 und der Führungsbahn 38 an dem Eintreibelement 10 vergrößert dargestellt.

In den Figuren 5, 7 und 8 ist zur Veranschaulichung eines Eintreibvorgangs mit dem Eintreibelement 10 ein Befestigungselement 40 angedeutet. Das Befestigungselement 40 wird beim Eintreibvorgang durch die Kolbenspitze 13 des Setzkolbens 12 mit einer Kraft in Setzrichtung 14 beaufschlagt.

In Figur 9 ist ein Setzgerät 50 mit einem Schwungradantrieb, wie er in den Figuren 5 bis 8 dargestellt ist, vereinfacht dargestellt. Das Setzgerät 50 umfasst ein Gehäuse 52 mit der gehäusefesten Bezugsfläche 1. Das Setzgerät 50 ist als handbetriebenes Setzgerät mit einem Handgriff 54 und einem Setzende 55 ausgeführt.

Das Setzgerät oder Setzwerkzeug 50 dient zum Eintreiben von Befestigungselementen 40 in einen (nicht dargestellten) Untergrund. Eine gewünschte Anzahl von Befestigungselementen 40 ist in einem Magazin 56 am Setzende 55 aufbewahrt. Aus dem Magazin 56 werden die Befestigungselemente 40, vorzugsweise automatisch, einzeln in einer Bolzenführung 58 bereitgestellt.

Die zum Eintreiben der Befestigungselemente 40 benötigte Energie wird zum Beispiel in Form von elektrischer Energie in einem Akkumulator 60 am unteren Ende des Handgriffs 54 bereitgestellt. Die in dem Akkumulator 60 gespeicherte elektrische Energie wird mit Hilfe eines Elektromotors, der vorteilhaft in das Schwungrad 3 integriert ist, in Rotationsenergie umgewandelt.

Durch diese Rotationsenergie wird das Schwungrad 3 in Drehung versetzt. Bei einer Betätigung eines Triggers oder Betätigungsknopfs 62 an dem Handgriff 54 wird die vorab beschriebene Schrägradkupplung so geschlossen, dass die in dem Schwungrad 3 gespeicherte Rotationsenergie zum Auslösen eines Setzvorgangs als Translationsenergie auf das Eintreibelement 10 übertragen wird.

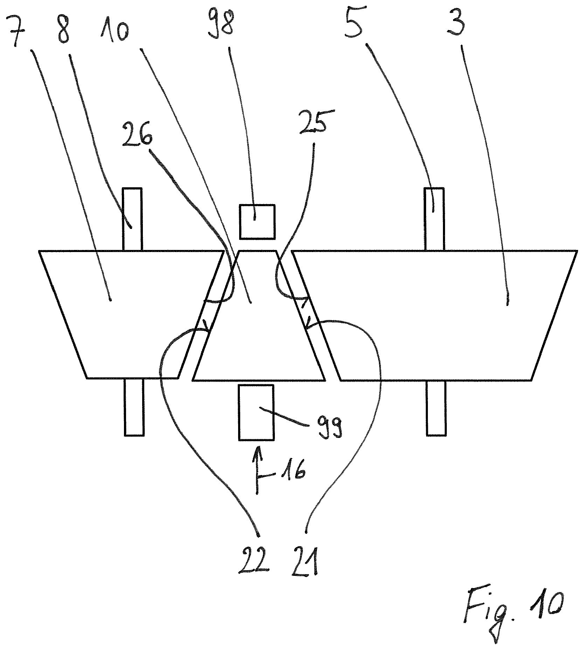

In Figur 10 ist eine Schrägradkupplungsanordnung nach einem weiteren Ausführungsbeispiel in einer Rückansicht dargestellt. Die Schrägradkupplungsanordnung umfasst ein Eintreibelement 10, ein Schwungrad 3 mit einer Schwungraddrehachse 5, und eine Gegenrolle 7 mit einer Gegenrollendrehachse 8. Das Eintreibelement 10 weist im Querschnitt die Gestalt eines Trapezes mit zwei parallelen Grundseiten auf, die durch zwei Schenkel miteinander verbunden sind. Weiterhin umfasst die Schrägkupplungsanordnung eine Führungsschiene 98.

Der in Figur 10 rechte Schenkel des keilförmigen oder trapezförmigen Querschnitts des Eintreibelements 10 stellt eine Schwungradkupplungsfläche 21 dar. Der in Figur 2 linke Trapezschenkel stellt eine Gegenrollenkupplungsfläche 22 dar. Die Schwungradkupplungsfläche 21 ist reibschlüssig mit einer Mantelfläche 25 des Schwungrads 3 verbindbar. Analog ist die Gegenrollenkupplungsfläche 22 mit einer Mantelfläche 26 der Gegenrolle 7 reibschlüssig verbindbar.

Wenn eine durch einen Pfeil 16 angedeutete Anpresskraft in Figur 10 von unten mittels eines Anpresselements 99 auf das Eintreibelement 10 aufgebracht wird, wird das Eintreibelement 10 mit der Schwungradkupplungsfläche 21 und der Gegenrollenkupplungsfläche 22 an das Schwungrad 3 und die Gegenrolle 7 gepresst. Die Rotationsenergie des Schwungrads 3 wird dann reibschlüssig auf das Eintreibelement 10 übertragen, insbesondere von der Mantelfläche 25 auf die Schwungradkupplungsfläche 21. Dadurch wird das Eintreibelement 10 translatorisch in einer Setzrichtung senkrecht zur Zeichenebene beschleunigt, so dass ein Setzvorgang ausgeführt werden kann.

In Figur 10 sieht man, dass die Schwungraddrehachse 5 parallel zu der Gegenrollendrehachse 8 angeordnet ist. Die Schwungradkupplungsfläche 21 ist in einem Winkel α zu der Schwungraddrehachse 5 angeordnet, wodurch das Schwungrad eine Kegelstumpfform aufweist. Die Gegenrollendrehachse 8 ist in ebenfalls in einem Winkel α zu der Gegenrollenkupplungsfläche 22 angeordnet, so dass auch die Gegenrolle 7 eine Kegelstumpfform aufweist. Der Winkel α zwischen der Schwungradkupplungsfläche 21 und der Gegenrollenkupplungsfläche 22 wird vorteilhaft für eine Reibkraftverstärkung genutzt.

## Patentansprüche

1. Schwungradangetriebenes Setzgerät (50) zum Eintreiben von Befestigungselementen (40) in einen Untergrund, mit einem in einer Setzrichtung (14) durch ein Schwungrad (3) antreibbaren Eintreibelement (10), das zwischen dem um eine Schwungraddrehachse (5) drehbaren Schwungrad (3) und einer um eine Gegenrollendrehachse (8) drehbaren Gegenrolle (7) geführt ist, wobei das Eintreibelement (10) eine mit dem Schwungrad (3) verbindbare Schwungradkupplungsfläche (21) und eine mit der Gegenrolle (7) verbindbare Gegenrollenkupplungsfläche (22) aufweist, **dadurch gekennzeichnet, dass** eine Flächennormale der Schwungradkupplungsfläche (21) in einem Winkel Alpha (α) ungleich Null zu einer Flächennormalen der Gegenrollenkupplungsfläche (22) angeordnet ist.

2. Schwungradangetriebenes Setzgerät nach Anspruch 1, **dadurch gekennzeichnet, dass** die Schwungraddrehachse (5) parallel zu der Gegenrollendrehachse (8) angeordnet ist.

3. Schwungradangetriebenes Setzgerät nach Anspruch 1, **dadurch gekennzeichnet, dass** die Schwungraddrehachse (5) in einem Winkel Alpha (α) ungleich Null zu der Gegenrollendrehachse (8) angeordnet ist.

4. Schwungradangetriebenes Setzgerät nach Anspruch 3, **dadurch gekennzeichnet, dass** das Eintreibelement (10) eine dem Schwungrad (3) zugewandte Schwungradkupplungsfläche (21) aufweist, die parallel zur Schwungraddrehachse (5) angeordnet ist.

5. Schwungradangetriebenes Setzgerät nach Anspruch 4, **dadurch gekennzeichnet, dass** das Eintreibelement (10) eine der Gegenrolle (7) zugewandte Gegenrollenkupplungsfläche (22) aufweist, die parallel zur Gegenrollendrehachse (8) angeordnet ist.

6. Schwungradangetriebenes Setzgerät nach Anspruch 5, **dadurch gekennzeichnet, dass** das Eintreibelement (10) mit der Schwungradkupplungsfläche (21) und der Gegenrollenkupplungsfläche (8) einen keilförmigen Querschnitt aufweist.

7. Schwungradangetriebenes Setzgerät nach Anspruch 6, **dadurch gekennzeichnet, dass** die Schwungradkupplungsfläche (21) und die Gegenrollenkupplungsfläche (8) als ebene Flächen ausgeführt sind, die zum Antreiben des Eintreibelements (10) mit Mantelflächen (25 beziehungsweise 26) des Schwungrads (3) beziehungsweise der Gegenrolle (7) reibschlüssig verbunden werden.

8. Schwungradangetriebenes Setzgerät nach einem der vorhergehenden Ansprüche, **dadurch gekennzeichnet, dass** der Winkel Alpha (α) ein spitzer Winkel ist.

9. Schwungradangetriebenes Setzgerät nach einem der vorhergehenden Ansprüche, **dadurch gekennzeichnet, dass** zwischen einer Senkrechten (30) zu einer Bewegungsachse (14) des Eintreibelements (10) und der Schwungraddrehachse (5)/Gegenrollendrehachse (8) ein Winkel Beta (β) ungleich Null vorgesehen ist.

10. Schwungradangetriebenes Setzgerät nach einem der vorhergehenden Ansprüche, **dadurch gekennzeichnet, dass** die Wirkungslinie einer Anpresskraft (16), die zum Erzeugen einer Kupplungsnormalkraft auf das Eintreibelement (10) aufgebracht wird, senkrecht zu einer beziehungsweise der Bewegungsachse (14) des Eintreibelements (10) verläuft.

11. Schwungradangetriebenes Setzgerät nach einem der vorhergehenden Ansprüche, **dadurch gekennzeichnet, dass** das Eintreibelement (10) zwischen zwei Linearführungen (31,32) geführt ist.

12. Verfahren zum Betreiben eines schwungradangetriebenen Setzgeräts (50) nach einem der vorhergehenden Ansprüche, **dadurch gekennzeichnet, dass** das Eintreibelement (10) beim Schließen einer mit dem Schwungrad (3) und der Gegenrolle (7) dargestellten Schrägradkupplung selbstverstärkend angetrieben wird.
